Europäisches Patentamt

European Patent Office

Office européen des brevets

(11) Numéro de publication: **0 273 297 B1**

(12) ## FASCICULE DE BREVET EUROPEEN

(45) Date de publication de fascicule du brevet:
25.09.91

(51) Int. Cl.5: **G01N 35/06**, G01F 11/02,
G01F 11/10

(21) Numéro de dépôt: **87118592.2**

(22) Date de dépôt: **15.12.87**

(54) Procédé et dispositif de dosage d'échantillons liquides.

(30) Priorité: **24.12.86 FR 8618256**

(43) Date de publication de la demande:
**06.07.88 Bulletin 88/27**

(45) Mention de la délivrance du brevet:
**25.09.91 Bulletin 91/39**

(84) Etats contractants désignés:
**AT BE CH DE ES FR GB GR IT LI LU NL SE**

(56) Documents cités:
**EP-A- 0 185 330**
**WO-A-85/02019**
**FR-A- 2 489 515**
**US-A- 4 457 184**

**Anorganisches Grundpraktikum, 4. Auflage,**
**Verlag Chemie GmbH, Weinheim/Bergstr.**
**1970, page 18**

(73) Titulaire: **Nivarox-FAR S.A.**
**Avenue du Collège 10**
**CH-2400 Le Locle(CH)**

(72) Inventeur: **Meyrat, Pierre-André**
**Rue D.-P.- Bourquin 5**
**CH-2300 La Chaux-de-Fonds(CH)**
Inventeur: **Oppliger, Alain**
**Av. L.-Robert 136**
**CH-2300 La Chaux-de-Fonds(CH)**
Inventeur: **Steiner, Denis**
**Rue de La Clé 47**
**CH-2610 St-Imier(CH)**

(74) Mandataire: **Caron, Gérard et al**
**ICB Ingénieurs Conseils en Brevets SA Passage Max. Meuron 6**
**CH-2001 Neuchâtel(CH)**

## Description

La présente invention est relative à un procédé et un dispositif de dosage d'échantillons liquides.

Lorsqu'on désire traiter successivement un grand nombre d'échantillons liquides, avec un dosage volumique précis, on se trouve confronté à un problème de rinçage des organes chargés d'opérer le dosage, et des canalisations qui établissent la communication entre ces divers organes.

En général, le nettoyage du circuit d'écoulement des échantillons est effectué avec un liquide de rinçage qui les lave entre les dosages des échantillons successifs afin de chasser tout résidus de l'échantillon traité précédemment.

A défaut de prendre cette précaution, de tels résidus peuvent modifier les caractéristiques de l'échantillon suivant, telle que par exemple sa composition ou sa concentration, ce dont il pourrait résulter des erreurs au niveau de l'analyse.

Outre le fait que l'opération de rinçage risque de modifier la concentration des échantillons, car il reste toujours dans le circuit d'écoulement une certaine quantité de liquide de rinçage, il faut observer également que cette opération nécessite des organes particuliers et que par ailleurs elle rallonge le temps de traitement de chaque échantillon puisque pendant l'opération de nettoyage, le dosage ne peut avoir lieu.

Dans une proposition antérieure plus élaborée de la conception générale indiquée ci-dessus (voir US-A-4 457 184), on décrit un procédé de prélèvement d'échantillons dans lequel une pipette est rincée à l'aide d'un liquide de rincage, puis on aspire une certaine quantité d'air dans la pipette et ensuite une quantité déterminée de l'échantillon. Ce dernier est alors séparé du liquide de rincage par une bulle d'air. Cette technique est délicate et nécessite toujours un liquide de rinçage.

L'invention a pour but de fournir un procédé et un dispositif au moyen desquels le dosage des échantillons successifs peut être effectué sans liquide de rinçage, sans perturber, ni la composition, ni la concentration des échantillons, et sans également augmenter le temps de traitement de chaque échantillon au-delà de l'intervalle de temps strictement nécessaire pour le dosage.

Selon ce procédé, une quantité en excès de l'échantillon suivant est utilisée elle-même pour le rinçage du circuit d'écoulement de l'échantillon, en chassant de ce circuit tout résidu de l'échantillon précédent après quoi les seconds récipients ne peuvent que recevoir une quantité correcte d'échantillon exclusivement constituée du liquide formé par l'échantillon suivant.

Le préambule de la revendication 1 du brevet énonce ce principe connu notamment par l'ouvrage "Anorganisches Grundpraktikum", 4. Auflage, Verlag Chemie GmbH, Weinheim Bergst., 1970, p. 18 et la partie caractéristique de la revendication 1 énonce l'opération de transvasement selon l'invention. La revendication 5 du brevet concerne un dispositif correspondant.

L'invention sera mieux comprise à l'aide de la description qui va suivre, donnée uniquement à titre d'exemple et faite en se référant aux dessins annexés sur lesquels:

- la figure 1 est un schéma symbolique d'une installation d'analyse dans laquelle est mis en oeuvre le procédé suivant l'invention;
- la figure 2 est une vue en élévation latérale, partiellement en coupe, d'un poste de transvasement/dosage, utilisé dans l'installation de la figure 1;
- la figure 3 est une vue en coupe horizontale, prise suivant la ligne III-III de la figure 2;
- la figure 4 est une vue frontale, à plus petite échelle, du poste de transvasement/dosage de la figure 2;
- la figure 5 est une vue en coupe et à grande échelle de certains détails de ce poste de transvasement/dosage.
- la figure 6 est une vue en élévation, partiellement en coupe, d'une partie d'un carrousel porte-échantillons utilisé dans l'installation suivant la figure 1;
- la figure 7 montre un dispositif d'indexage de la position du carrousel représenté sur la figure 4;
- la figure 8 est une vue en élévation, partiellement en coupe, d'un poste de mixage utilisé dans l'installation représentée à la figure 1;
- la figure 9 est une vue en coupe schématique d'un poste d'analyse photométrique utilisé dans l'installation de la figure 1;
- la figure 10 est une vue en coupe suivant la ligne X-X de la figure 9; et
- la figure 11 est un schéma explicatif illustrant le fonctionnement de l'installation représentée à la figure 1.

Dans ce qui va suivre, l'invention sera décrite dans son application à une installation d'analyse permettant de mesurer automatiquement la teneur en ATP (adénosine-triphosphate) afin d'estimer l'activité biologique d'un milieu tel que le sol, par exemple.

Dans un article de la revue "Soil Biol. Biochem." volume 16, no 4, page 361-366, 1984, N. Maire décrit une méthode d'analyse d'un milieu, tel que le sol, qui consiste à extraire la molécule ATP des cellules du milieu par rupture des parois cellulaires, puis la mesure photométrique de la molécule par une réaction enzymatique de bioluminescence, l'intensité de la lumière émise au cours de cette réaction étant directement proportionnelle à la concentration de l'ATP, concentration qui est elle-même représentative de l'activité biologique de l'échantillon de sol examiné. En effet, l'ATP est un mononucléotide du métabolisme que l'on retrouve dans tous les organismes vivants et qui assure la transmission ou la mise en réserve d'énergie dans la plupart des réactions biochimiques se déroulant au sein des cellules vivantes (respiration, fermentation, photosynthèse, etc).

L'extraction de la molécule ATP par rupture des parois cellulaires est réalisée en diluant l'échantillon de sol dans une certaine quantité d'acide telle que le $H_2SO_4$ complétée de préférence par une opération mécanique de mixage de l'échantillon ainsi dilué. Comme par ailleurs, la réaction enzymatique nécessaire à l'analyse photométrique ne supporte pas de milieu acide, il est nécesaire, avant de procéder à cette analyse photométrique, d'ajuster le pH à une valeur pratiquement neutre par adjonction d'un adjuvant spécialement destiné à cet effet. L'ajustage du pH doit naturellement intervenir sur un volume d'échantillon bien déterminé et c'est à ce niveau que dans l'installation décrite ci-après interviennent les caractéristiques essentielles de la présente invention.

Il est bien entendu que la description qui va suivre de cette installation d'analyse, ne doit pas être considérée comme une limitation aux applications de l'invention, qui, au contraire, peut être utilisée chaque fois que l'on souhaite obtenir le dosage d'un certain nombre d'échantillons individuels sans qu'il y ait risque de contamination des échantillons entre eux.

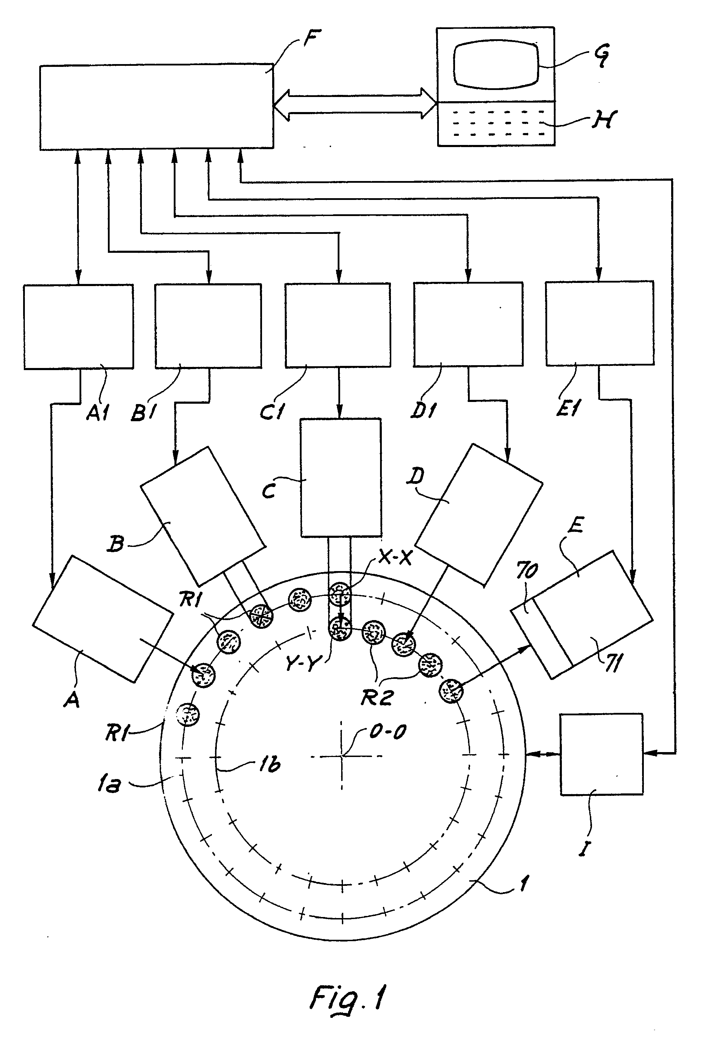

Sur le schéma de la figure 1, on a représenté un plateau ou carrousel 1 monté rotatif autour d'un axe vertical 0-0. Sur un premier cercle 1a de ce carrousel sont disposés des premiers récipients R1, tandis que sur un second cercle 1b concentrique au premier mais de diamètre plus faible, sont disposés de seconds récipients R2. Les récipients remplis de liquide sont hâchurés.

Autour du carrousel sont groupés plusieurs postes de travail désignés par les lettres A à E et qui effectuent successivement sur les échantillons les opérations suivantes:

Poste A - addition d'une quantité déterminée de $H_2SO_4$ à l'échantillon solide préalablement versé dans les récipients R1.

Poste B - mixage de la solution obtenue dans le poste A.

Poste C - transvasement de l'échantillon pour son dosage et filtrage simultanés (procédé suivant l'invention).

Poste D - ajustage du pH.

Poste E - analyse photométrique de l'échantillon résultant de l'opération effectuée dans le poste D.

Les postes A à E sont commandés par l'intermédiaire d'interfaces A1 à E1 qui transforment les ordres d'un ordinateur F en des signaux de commande utilisables par les divers organes des postes de travail A à E. L'ordinateur F est équipé d'un écran de visualisation G et d'un clavier de commande H, l'installation fonctionnant automatiquement à l'aide d'un programme qui est exécuté dans l'ordinateur F.

Le carrousel 1 effectue un mouvement de rotation intermittent commandé également par l'ordinateur F à travers une interface I.

Il est à noter que les échantillons solides préparés dans les récipients R1, avant d'être placés sur le plateau 1, sont composés de préférence conformément aux prescriptions décrites dans la demande de brevet FR 86 11675 déposée le 11 août 1986 et intitulée "Procédé de fabrication d'un élément comportant une quantité déterminée d'une substance donnée et élément obtenu par ce procédé".

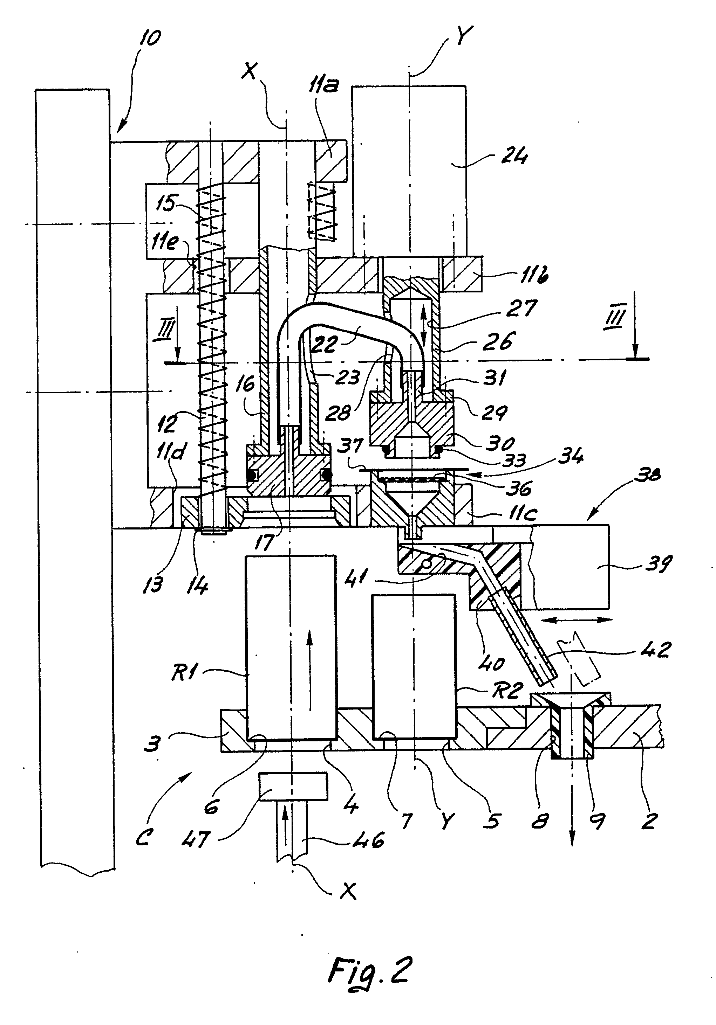

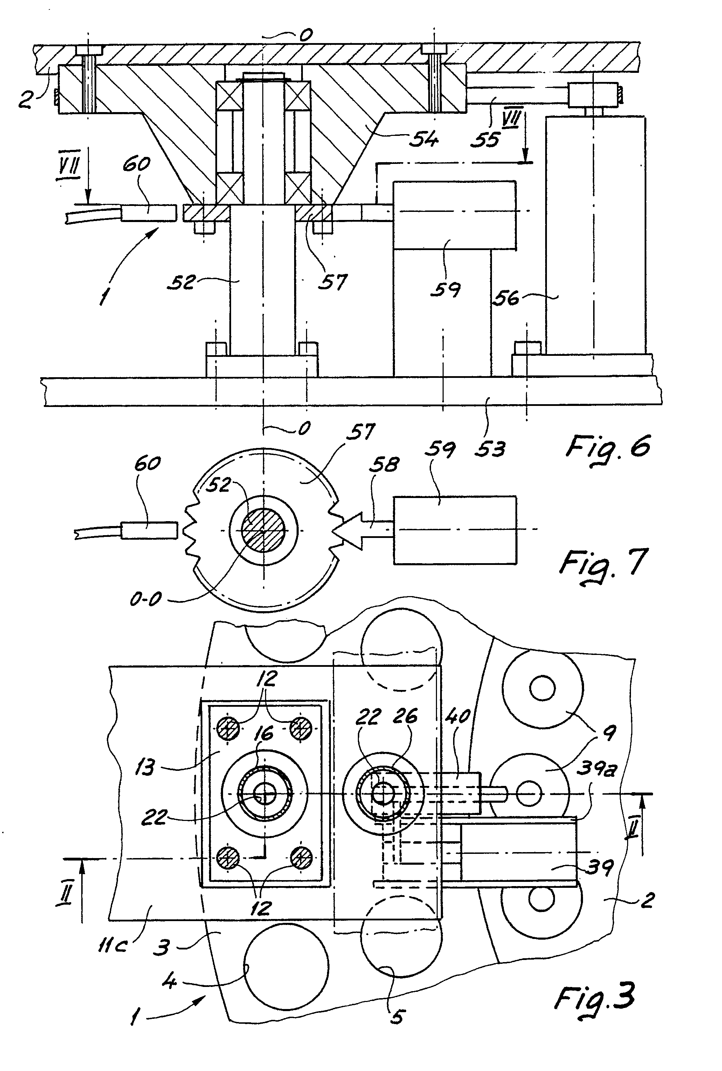

On va maintenant décrire les figures 2 à 5 qui représentent le poste de transvasement C selon l'invention permettant d'obtenir des quantités dosées avec précision des échantillons à analyser.

Le carrousel 1 comporte un plateau circulaire 2 auquel est fixé un anneau périphérique 3. Ce dernier est percé de deux séries de trous 4 et 5 formant deux rangées circulaires concentriques. Le pas angulaire entre les centres des trous est constant sur toute la périphérie de l'anneau 3 tandis que les centres de chaque couple de trous 4 et 5 se trouvent alignés radialement.

Chaque trou présente en outre un épaulement horizontal 6, 7 (figure 2) pour former un appui aux récipients R1 et R2, respectivement. Le plateau 2 présente à sa périphérie des trous 8 alignés radialement sur chaque couple de trous 4 et 5 et garnis de bouchons verseurs 9, ces bouchons étant destinés à communiquer avec une canalisation d'évacuation (non représentée) lorsqu'ils se trouvent dans le poste de transvasement C.

Le poste de transvasement C comporte une potence 10 présentant trois traverses 11, 11b et 11c situées à des hauteurs différentes.

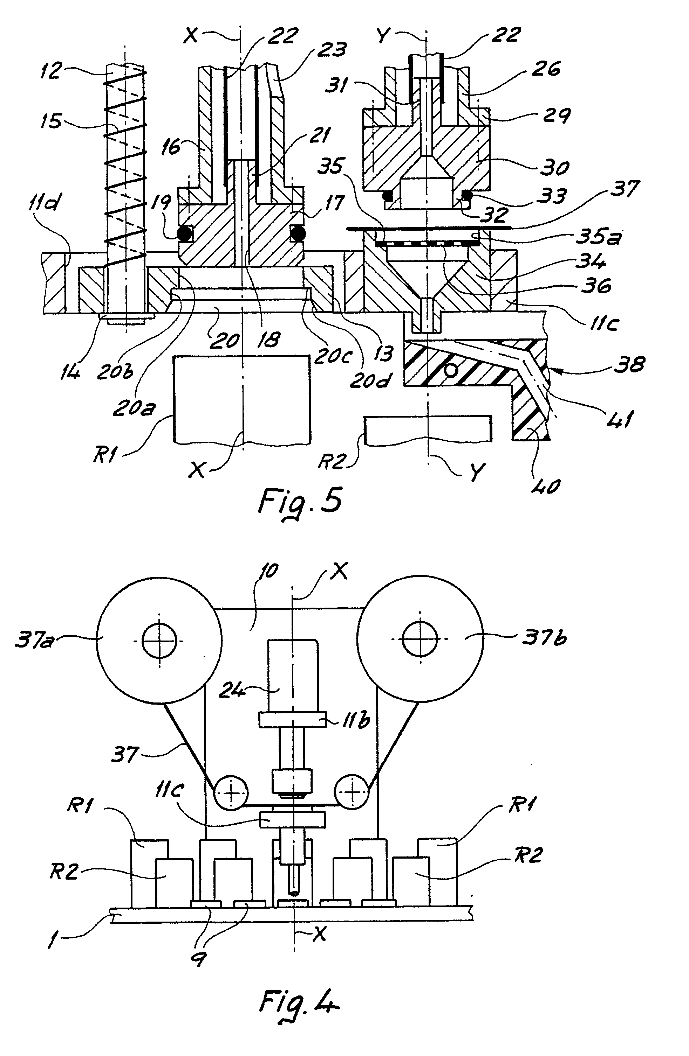

La traverse supérieure 11a supporte quatre colonnettes verticales 12 qui s'étendent vers le bas et sur lesquelles peut coulisser une plaque rectangulaire de guidage 13 retenue sur ces colonnettes par des bagues d'arrêt 14. Des ressorts 15 sont engagés sur les colonnettes entre la traverse 11a et la plaque de guidage 13 afin de solliciter celle-ci vers sa position inférieure. Lorsque la plaque de guidage 13 est dans sa position inférieure, elle s'ajuste avec un jeu important dans une ouverture rectangulaire 11d de la traverse 11c. Par ailleurs, les colonettes 12 équipées de leur ressort 15 passent dans des trous 11e ménagés dans la traverse 11b (figures 2 et 5).

Un tube 16 est fixé verticalement dans les traverses 11a et 11b. Il supporte à son extrémité inférieure un piston 17 (figure 5) percé d'un passage central 18 et entouré d'une garniture d'étanchéité 19. La plaque de guidage 13 comporte une ouverture étagée 20 avec une partie supérieure cylindrique 20a dont le diamètre est légèrement supérieur au diamètre de la garniture d'étanchéité 19 dans son état libre. La seconde partie 20b de l'ouverture 20 est de diamètre supérieur de façon à délimiter un épaulement radial 20c tourné vers le bas, la seconde partie se raccordant sur une partie 20d évasée vers le bas de l'ouverture 20.

L'épaulement radial 20c est destiné à servir de butée pour le bord supérieur circulaire des récipients R1 au cours du processus de dosage, comme décrit par la suite. L'ouverture 20 est alignée sur l'axe X-X du piston 17 et du tube 16. L'axe X-X coupe le cercle 1a sur lequel sont placés les récipients R1.

Le piston 17 présente à sa face supérieure un embout de raccordement 21 auquel est branché un tuyau de communication 22 qui traverse un orifice latéral 23 ménagé dans le tube 16.

La traverse 11b porte un électro-aimant 24 dont le noyau (non représenté) est couplé à une tige 26 s'étendant verticalement et présentant un trou borgne 27. Le tuyau 22 pénètre dans ce trou borgne à travers un orifice latéral 28 de la tige 26. A son extrémité inférieure, celle-ci comporte une bride 29 à laquelle est rapportée une pastille de raccordement 30.

Cette pastille est percée en son centre et comporte un embout supérieur 31 sur lequel vient se connecter le tuyau 22, ainsi qu'une collerette inférieure 32 autour de laquelle est placée une garniture d'étanchéité 33. La tige 26 ainsi que la pastille 30 forment un organe mobile verticalement commandé par l'électro-aimant 24.

En dessous de cet organe mobile est prévue une pièce en forme d'entonnoir 34 fixée dans la traverse 11c et alignée verticalement sur la tige 26 et la pastille 30. L'entrée de l'entonnoir 34 est formé avec un épaulement radial 35 sur lequel est posée une grille circulaire 36. La bordure 35a de l'épaulement 35 coopère avec la garniture d'étanchéité 33 pour garantir un ajustement étanche entre la pastille 30 et l'entonnoir 34, lorsque la pastille se trouve dans sa position basse après commande de l'électro-aimant 24.

Un ruban de papier filtre 37 peut circuler entre l'entonnoir 36 et la pastille 30 lorsque ces organes sont écartés l'un de l'autre.

Des moyens de déversement 38 sont fixés sous la traverse 11c. Ils comportent un électro-aimant 39 qui est fixé dans un support en U 39a solidaire de la traverse 11c et dont le noyau est couplé à un bloc coulissant 40. Ce bloc 40 est disposé à côté du support 39a et percé d'une canalisation 41 dont l'entrée peut venir normalement se placer en dessous de la sortie de l'entonnoir 34. La sortie de cette canalisation est raccordée à un tuyau de déversement 42 qui débouche au-dessus de l'un des bouchons- verseurs 9 du plateau 2. Lorsque l'électro-aimant 39 est commandé, le bloc coulissant 40 recule pour s'effacer devant la sortie de l'entonnoir 34, moyennant quoi le liquide s'écoulant dans cet entonnoir tombe dans le récipient R2 se trouvant dans le poste de transvasement C au moment considéré. L'électro-aimant 24, le tube 26, la pastille 30 et l'entonnoir 34 sont alignés sur un même axe vertical Y-Y qui coupe le cercle 1b du carrousel 1, les points d'intersection des axes X-X et Y-Y respectivement avec les cercles 1a et 1b étant situés sur des rayons confondus de ces cercles.

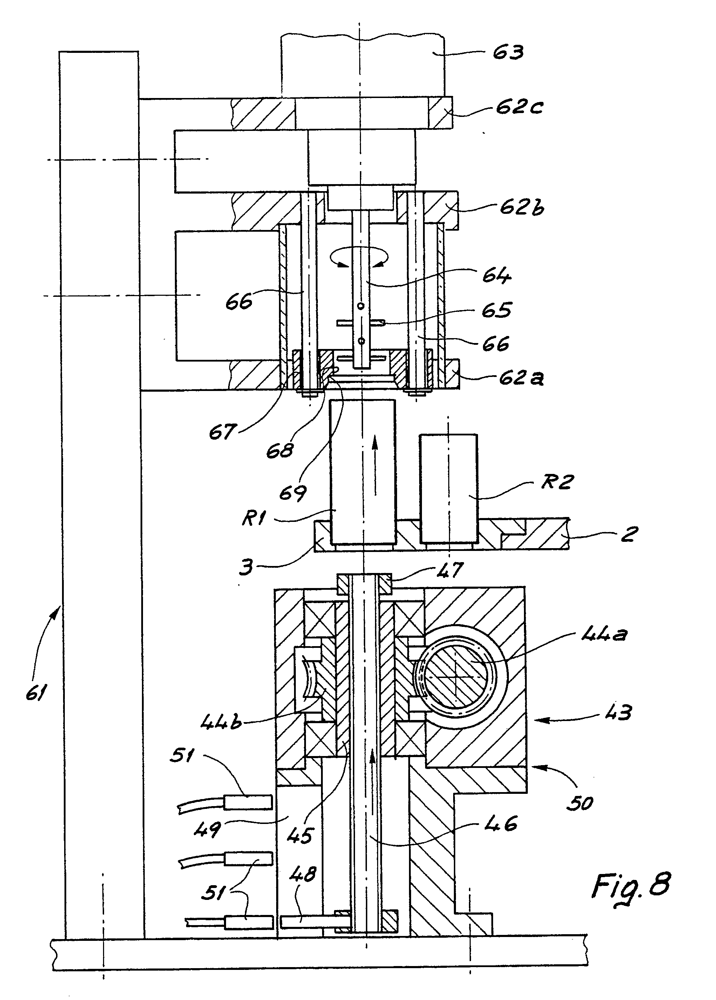

Le poste de transvasement/dosage C comporte également un dispositif de levage 43 représenté dans sa totalité sur la figure 8. Ce dispositif de levage est prévu aussi bien dans le poste de transvasement C que dans le poste de mixage B que l'on voit sur la figure 8. Le dispositif de levage comporte une vis sans fin 44a à axe horizontal entraîné par un moteur électrique (non visible sur les figures). La vis 44a coopère avec un écrou 44b qui est solidaire d'un manchon taraudé 45 d'axe vertical dans lequel peut se déplacer verticalement une tige filetée 46 munie à son extrémité supérieure d'un poussoir 47 en forme de bague. Cette tige 46 est bloquée en rotation autour de son axe grâce à un doigt de blocage en rotation 48 qui coulisse dans une rainure 49 ménagée dans le corps 50 du dispositif de levage 43.

Dans le poste de transvasement C, la tige 46 (figure 2) est alignée sur l'axe X-X et se trouve donc successivement alignée avec tous les récipients R1. Dès lors, la vis 44a étant entraînée en rotation dans un sens déterminé, la tige 46 peut soulever le récipient R1 considéré, la bague 47 ayant un diamètre légèrement inférieur à celui du trou 4 correspondant ménagé dans le carrousel 1.

Pendant son déplacement vers le haut, le bord du récipient R1 vient heurter l'épaulement 20c, puis l'ensemble de la plaque 13 et du récipient R1 poursuit son déplacement à l'encontre de l'action des ressorts 15. Pendant ce déplacement, le piston 17 va pénétrer dans le récipient R1 pendant que la garniture 9 joue le rôle de segment d'étanchéité. On comprend donc que cette opération a pour effet une réduction du volume sous le piston 17 moyennant quoi le liquide est chassé du récipient R1 en une quantité qui est proportionnelle au déplacement relatif du piston et du récipient.

Le liquide passe à travers le trou 18 du piston 17, le tuyau 22 et la pastille 30 et est déversé dans l'entonnoir 34.

Lorsque le sens de rotation de la vis 44a est inversé, l'ensemble de la plaque 13 et du récipient R1 descend sous l'action des ressorts 15, jusqu'à ce que le récipient R1 est de nouveau placé sur le carrousel 1.

Des capteurs de position 51 (figure 8) sont prévus pour détecter la position de la tige 46 et par conséquent du récipient R1.

Les capteurs sont raccordés à l'interface C1 pour transmettre des informations à l'ordinateur F qui, à partir de ces informations, génère des signaux de commande permettant de coordonner les divers mouvements effectués dans le poste C.

Ainsi, pendant une première phase de montée, c'est-à-dire lorsque le doigt 48 se déplace du capteur 51 inférieur au capteur 51 intermédiaire, la tige 46 est commandée à grande vitesse. Dès que le doigt 48 atteint le capteur intermédiaire, la vitesse de la tige est ralentie et l'électro-aimant 24 est commandé de manière à appliquer la pastille 30 contre une portion du ruban de papier-filtre 37, elle-même appliquée contre la grille 36 qui lui sert de soutien. L'étanchéité est assurée par la garniture 33.

La figure 4 montre que le ruban 37 est dévidé d'une bobine de réserve 37a et enroulé sur une bobine réceptrice 37b entraînée par un moteur (non représenté). Ce dernier est commandé par l'ordinateur F via l'interface C1. Chaque transvasement est ainsi effectué avec une portion vierge du ruban 37, le déplacement du ruban étant effectué, par exemple, à chaque pas du caroussel 1.

Pendant que le récipient R1 monte, le liquide s'écoule d'abord dans la canalisation 41 du bloc 40 pour être déversé vers l'évacuation à travers le bouchon 9. Lorsque le doigt 48 atteint le capteur 51 supérieur, l'électro-aimant 39 est commandé pour reculer le bloc 40 après quoi le liquide peut s'écouler dans le récipient R2. Le mouvement de rotation de la vis 44a est alors commandé par un compteur numérique qui enregistre le nombre de tour avec précision jusqu'à ce qu'un certain nombre soit atteint. Pendant ce temps, la tige 46 aura monté d'une hauteur très précise déterminant le dosage du liquide. En effet, le piston aura alors chassé une quantité exactement dosée de liquide du récipient R1 vers le récipient R2, alors qu'avant le retrait du bloc 40, le liquide a rincé l'ensemble du trajet d'écoulement pour en éliminer tout résidu de l'échantillon précédemment traité.

Les figures 6 et 7 montrent le montage du plateau 2. Une broche de pivotement 52 est montée verticalement sur le bâti 53 de l'installation. Elle supporte à rotation une roue 54 à laquelle est rapporté le plateau 2 et qui est couplée par une courroie 55 à un moteur d'entraînement 56 fixé sur le bâti 53. L'indexation des positions du plateau 2 est assurée par une roue dentée 57 montée en dessous de la roue 54 autour de la broche 52 et coopérant avec un organe de blocage rétractable 58 commandé par un électro-aimant 59 à l'aide d'un capteur 60.

La figure 8 représente le poste de mixage B dont on a déjà décrit le dispositif de levage 43. Il comporte une potence 61 avec trois traverses 62a, 62b et 62c. Un moteur électrique d'entraînement 63 est monté sur la traverse 62c et son arbre de sortie est couplé à une tige 64 pourvue de picots de mixage 65. L'axe de rotation de cet ensemble est vertical. La traverse 62b supporte deux tiges de coulissement verticales 66 sur lesquelles peut se déplacer une plaque de guidage 67 percée d'un orifice 68 dans lequel est ménagé un épaulement radial 69. Par conséquent, lorsque le dispositif de levage 42 de ce poste de mixage est actionné, le récipient R1 se trouvant à cet instant dans ce poste est soulevé et vient par son bord supérieur en butée contre l'épaulement 69. Il en résulte la montée de la plaque 67 et l'introduction de la tige 64 dans le liquide se trouvant dans le récipient R1. L'ordre est alors donné au moteur 63 d'entraîner la tige 64 en rotation pour mixer le liquide se trouvant dans le récipient.

Lorsque le sens de rotation de la vis 44a est inversé, le récipient est redescendu sur le carrousel 1 pendant que la plaque de guidage 67 retourne vers sa position initiale. Comme dans ce cas, le récipient R1 n'est pas en contact étanche avec une garniture, contrairement à ce qui se passe dans le poste C, la redescente est régie par le poids propre des éléments.

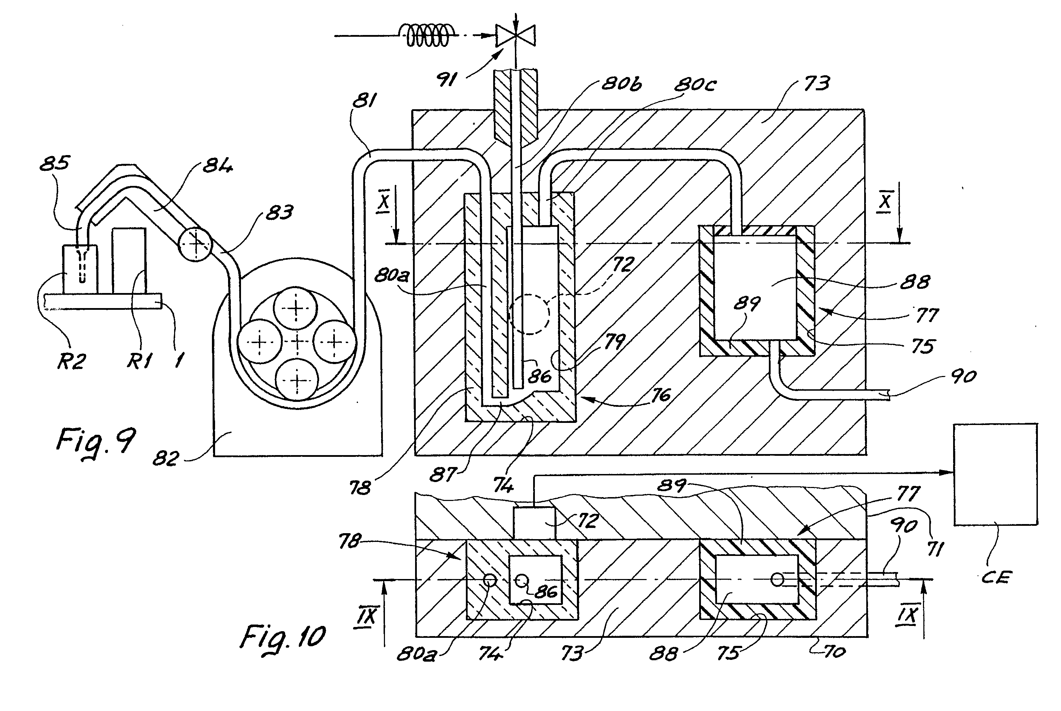

Comme déjà indiqué ci-dessus, l'installation qui est décrite ici en tant qu'exemple d'application de l'invention, comprend un poste de mesure de bioluminescence E (figure 1) dont certains détails importants sont représentés sur les figures 9 et 10.

Le poste de mesure E comprend une capsule de mesure 70 qui est fixée contre la paroi avant d'un boîtier 71 contenant notamment un tube photomultiplicateur 72 et un circuit d'exploitation CE raccordé à ce tube et capable de fournir un signal représentatif de la quantité de lumière captée par le tube au cours de chaque cycle de traitement d'un échantillon. Le boîtier peut être celui vendu sous la référence XP-2000 par la Société SKAN-AG, CH-4009 Basel- Alschwill.

La capsule de mesure 70 comprend une plaque métallique rigide 73 vissée sur le boîtier 71 d'une manière garantissant l'étanchéité à la lumière. La plaque 73 présente deux cavités 74 et 75 dans lesquelles sont logées respectivement une cellule de mesure 76 et une cellule 77 d'évacuation de l'échantillon analysé.

La cellule de mesure 76 est formée par un bloc creux 78 en une matière transparente définissant une chambre 79. Trois canalisations 80a, 80b et 80c débouchent dans cette chambre 79. La canalisation 80a est ménagée directement dans le bloc 78 et communique à travers un tuyau 81 avec une pompe péristaltique 82. Celle-ci est est raccordée par une canalisation 83 à un bras pivotant 84 qui supporte une pipette 85. Le bras 84 pivote sur un support fixe (non représenté) monté sur le bâti 53 de l'installation. Ainsi, la pipette 85 peut plonger dans chaque récipient R2 pour en aspirer l'échantillon, grâce au mouvement du bras 84 coordonné avec celui du carousel 1, sous la commande de l'ordinateur F.

La canalisation 80b communique avec un embout de tube 86 qui descend dans la chambre 79 pour déboucher près de l'extrémité de la canalisation 80a.

Comme on peut le constater sur la figure 9, la paroi de la chambre 79 présente un alvéole de tourbillonnement 87.

La canalisation 80c est ménagée dans le corps de la plaque rigide 73 et débouche dans une chambre anti-retour 88 délimitée par un bloc creux 89 qui est logé dans la cavité 75 de la plaque. La chambre anti-retour 88 est raccordée à l'évacuation par l'intermédiaire d'une canalisation 90 creusée dans la plaque.

Il est à noter que la pompe péristaltique 82 est réversible afin de permettre l'évacuation de la chambre de mesure 79.

La canalisation 80b est destinée à l'introduction d'une enzyme dans l'échantillon pour y créer la réaction de bioluminescence. Pour commander cette introduction, la canalisation 80b est raccordée à une soupape 91 commandée par l'ordinateur F à travers l'interface E1 (figure 1). La soupape 91 est raccordée à son tour à un réservoir de substance enzymatique (non représenté)

La réaction de bioluminescence ne nécessite que très peu de liquide échantillon, en une quantité bien inférieure à celle qui est contenue dans les récipients R2. On peut donc, ici également, utiliser l'échantillon lui-même pour débarrasser le circuit d'écoulement vers la cellule de mesure, des résidus de l'échantillon analysé précédemment. Le temps d'écoulement nécessaire pour que le rinçage de ce circuit soit suffisant, peut facilement être déterminé car il correspond à un certain temps de fonctionnement de la pompe péristaltique 82. Il suffit donc de déclencher l'introduction de l'enzyme dans la cellule de mesure à un instant prédéterminé situé à la fin de ce temps pour être certain que la mesure s'effectue bien sur un échantillon non pollué par l'échantillon précédent. En d'autres termes, la soupape 91 doit être ouverte à cet instant pendant que la pompe continue à fonctionner encore pendant un certain intervalle, ce qui provoque, grâce à la cavité de tourbillonnement 87 située au voisinage de la sortie du tube 86, un mélange intime de l'échantillon et de l'enzyme.

L'excès de liquide est évacué à travers la chambre 88.

La réaction de l'enzyme sur l'échantillon provoque dans le liquide contenu dans la chambre de mesure 79, l'apparition très brusque d'une certaine quantité de lumière en fonction de la quantité d'ATP libérée dans l'échantillon. Cette quantité de lumière est mesurée par le photomultiplicateur 72 qui génère un signal de mesure traité dans le circuit d'exploitation CE. Ce dernier transmet les données ainsi recueillées vers l'ordinateur F par l'intermédiaire de l'interface E1.

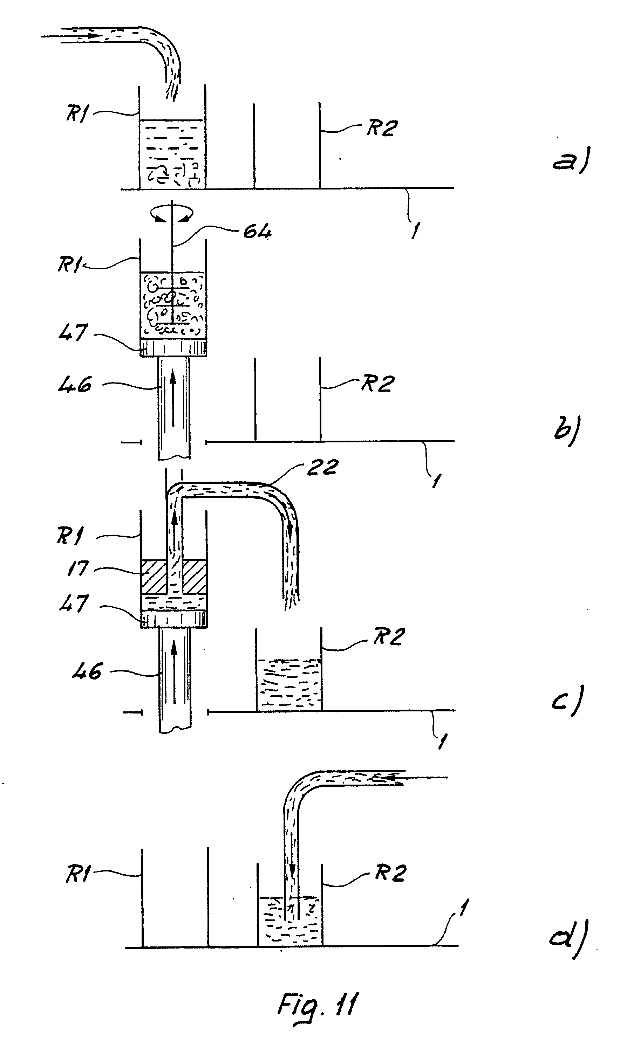

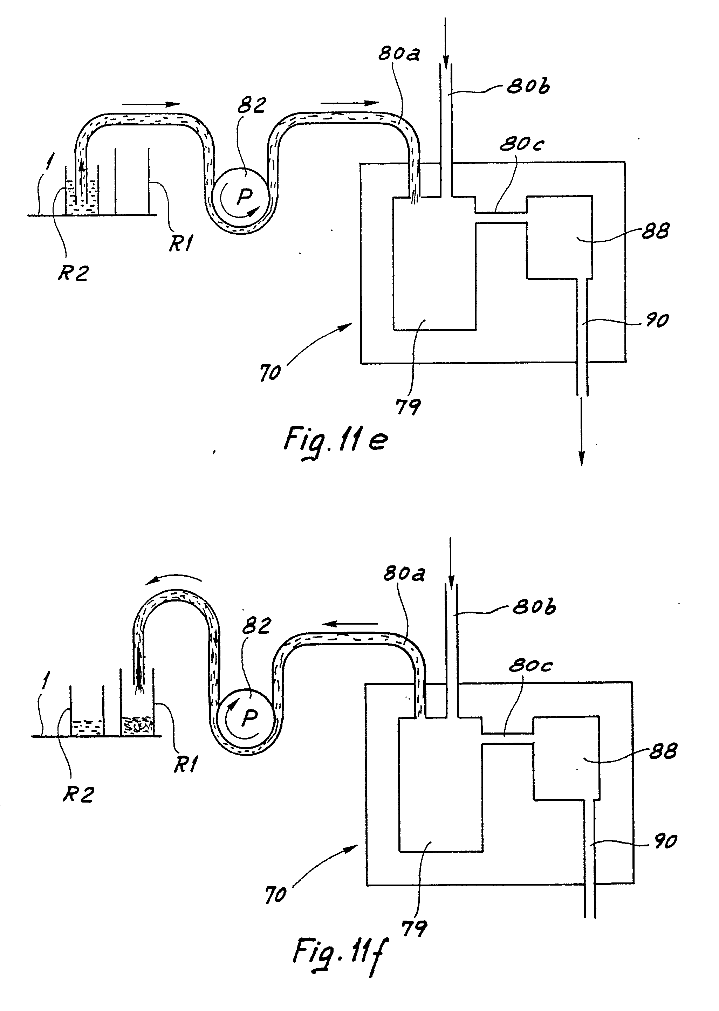

La figure 11 illustre schématiquement le fonctionnement global de l'installation qui vient d'être décrite.

Le carrousel 1 est entrainé en rotation d'un mouvement pas à pas de manière que les couples de récipients R1 et R2 soient successivement placés dans les postes de travail A à E groupés autour du carroussel 1. Ces postes travaillent simultanément sur cinq échantillons à la fois.

L'opération a consiste à verser dans le récipient R1 une certaine quantité d'acide ($H_2SO_4$, par exemple) capable de libérer l'ATP des cellules contenues dans la matière à analyser. Celle-ci est préalablement introduite dans les récipients R1 hors de l'installation éventuellement accompagnée d'additifs conformément au processus décrit dans l'article et la demande de brevet précités.

L'opération b consiste à accélérer mécaniquement la libération de l'ATP, les récipients R1 étant déplacés verticalement comme décrit ci-dessus.

L'opération c effectuée dans le poste C est le transvasement/dosage conforme aux caractéristiques essentielles de l'invention. Au cours de cette opération, une certaine quantité précisément dosée du mélange résultant du mixage est transférée dans le récipient R2.

Au cours de l'opération d, on ajuste le pH de cette quantitée dosée d'échantillon pour qu'elle soit très proche d'une solution neutre.

L'opération e consiste à effectuer la mesure proprement dite de la bioluminescence comme précédemment décrit à propos des figures 9 et 10. Dans ce cas, la pompe est donc entrainée de manière qu'elle véhicule le liquide du récipient R2 vers la cellule de mesure.

Enfin, l'opération f consiste à refouler le liquide restant dans la capsule 70 après la mesure, dans le récipient R1 le bras 84 étant alors placé de telle manière que la pipette se trouve placée au-dessus de ce dernier.

**Revendications**

1. Procédé de dosage d'échantillons liquides consistant à préparer dans plusieurs premiers récipients (R1) des échantillons dont le volume est constitué de la quantité d'échantillon à obtenir majorée d'une quantité d'échantillon en excès, et à transvaser successivement le contenu de chacun des premiers récipients (R1), d'abord vers une évacuation (9, 41, 31) au plus jusqu'à concurrence de ladite quantité en excès, puis vers un second récipient (R2) jusqu'à concurrence de la quantité d'échantillon liquide à obtenir, ledit procédé étant caractérisé en ce que, pour chasser le liquide d'échantillon de chaque premier récipient (R1), celui-ci est réalisé sous la forme d'un cylindre recevant un piston (17), et en ce qu'un mouvement relatif est provoqué entre le récipient (R1) et ledit piston (17) pour opérer d'abord le rinçage du circuit d'écoulement suivi par le liquide pendant le transvasement, puis le dosage par détermination de la durée dudit mouvement relatif.

2. Procédé de dosage suivant la revendication 1, caractérisé en ce qu'il consiste en outre à filtrer chaque échantillon au cours de ladite opération de transvasement.

3. Procédé de dosage suivant la revendication 1, caractérisé en ce qu'il consiste à provoquer ledit mouvement relatif par déplacement desdits récipients (R1).

4. Procédé de dosage suivant l'une quelconque des revendications 1 à 3, caractérisé en ce qu'il consiste à filtrer chaque échantillon après renouvellement d'un élément de filtrage avant l'opération de transvasement.

5. Dispositif de dosage d'échantillons liquides comprenant une pluralité de couples formés d'un premier (R1) et d'un second récipients (R2), les premiers récipients (R1) étant destinés à contenir chacun un échantillon à doser majoré d'une quantité en excès par rapport au volume à obtenir, les seconds récipients (R2) étant destinés à recevoir les volumes dosés d'échantillon, le dispositif comprenant également un poste de transvasement (C) des échantillons successifs de leur premier récipient (R1) dans leur second récipient (R2) et des moyens de transport (1) pour amener successivement chaque couple de premiers et seconds récipients (R1, R2) dans le poste de transvasement (C), ledit dispositif étant caractérisé en ce que ce poste de transvasement (C) comprend :
   - des moyens de pompage (R1; 17; 43) du liquide pour opérer le transvasement comportant un piston (17) coopérant avec chacun desdits premiers récipients (R1) réalisé chacun sous la forme d'un cylindre recevant ledit piston (17), et des moyens moteurs (43) pour provoquer un mouvement relatif axial entre ledit piston (17) et chacun desdits premiers récipients (R1) pendant le transvasement,
   - un ensemble verseur (24 à 36) destiné à communiquer avec les seconds récipients (R2), et
   - des moyens de déversement (38) destinés à être interposés entre l'ensemble verseur (24 à 36) et chaque second récipient (R2) pendant un intervalle de temps prédéterminé situé au début du transvasement et à être effacés pendant le reste de la durée du transvasement, ledit intervalle de temps prédéterminé correspondant au plus au transvasement de la quantité en excès d'échantillon.

6. Dispositif suivant la revendication 5, caractérisé en ce que ledit piston (17) est monté fixe dans ledit poste de transvasement (C) et en ce que lesdits moyens moteurs (43) comprennent un organe poussoir (46, 47) pouvant être animé d'un mouvement vertical et capable d'engager ledit récipient (R1) sur ledit piston (17) par poussée contre le fond de ce récipient, puis de faire pénétrer le piston (17) dans ledit récipient (R1) sur une distance prédéterminée, des moyens de rappel (12 à 15) étant prévus pour dégager le récipient (R1) du piston (17) après achèvement du transvasement.

7. Dispositif suivant la revendication 6, caractérisé en ce que lesdits moyens de rappel comprennent une plaque de guidage (13) déplaçable le long de guides verticaux (12) prévus dans ledit poste de transvasement (C), ladite plaque présentant une ouverture (20) pour le passage du piston (17), ladite ouverture étant bordée d'un épaulement (20c) contre lequel le bord supérieur du récipient (R1) vient en butée pendant ledit mouvement relatif du piston (17) et du récipient (R1), et en ce que lesdits moyens de rappel comprennent des ressorts (15) associés auxdits guides (12) et agissant sur ladite plaque à l'encontre du mouvement ascendant de celle-ci.

8. Dispositif suivant l'une quelconque des revendications 5 à 7, caractérisé en ce que ledit piston (17) comporte un passage central (18) à travers lequel le liquide est chassé du premier récipient (R1) pendant le transvasement.

9. Dispositif suivant l'une quelconque des revendications 5 à 8, caractérisé en ce qu'un dispositif de filtrage (37) est prévu dans ledit ensemble verseur (24 à 36) afin de filtrer le liquide chassé dudit premier récipient (R1) pendant le transvasement.

10. Dispositif suivant la revendication 9, caractérisé en ce que ledit ensemble verseur comprend une première pièce (34) en forme d'entonnoir à l'aplomb de laquelle sont amenés successivement lesdits seconds récipients (R2), et une seconde pièce (30) montée mobile par rapport à la première pièce et s'ajustant de façon étanche dans l'entrée de cette dernière, avec interposition d'un élément de filtrage (37), ladite seconde pièce (30) étant mise en communication avec ledit premier récipient recevant ledit piston pour conduire le liquide en cours de transvasement dans ladite première pièce (34) en forme d'entonnoir.

11. Dispositif suivant la revendication 10, caractérisé en ce que lesdits éléments de filtrage (37) forment partie d'un ruban de papier-filtre amené pas à pas dans ledit ensemble verseur (24 à 36) pour renouveller le papier-filtre après chaque opération de transvasement d'un échantillon.

12. Dispositif suivant l'une quelconque des revendications 5 à 11, caractérisé en ce que lesdits moyens de déversement comprennent un bloc mobile (40) percé d'une canalisation (41) qui communique avec une évacuation (9) et en ce que ce bloc est monté coulissant dans ledit poste de transvasement (C) pour que l'embouchure de ladite canalisation (41) puisse être placée sous ledit ensemble verseur (24 à 36) pendant que le liquide en excès de l'échantillon est chassé dudit premier récipient (R1).

**Claims**

1. Method for the dosage of liquid samples, which comprises preparing, in a plurality of first containers (R1), samples whose volume is made up of a given quantity of a sample to be obtained plus an excess quantity of sample, and successively decanting the contents of each of said first containers (R1) firstly towards an evacuation means (9, 41, 31) up to a maximum quantity corresponding to said excess quantity, then towards a second container (R2) up to said given quantity of sample to be obtained, said method being characterized in that , to drive the liquid sample from each first container (R1), said first container is realized as a cylinder receiving a piston (17), and in that a relative movement is provided between the container (R1) and said piston (17) firstly to rinse the flow circuit followed by the liquid during decanting and secondly to effect metering by controlling the duration of said relative movement.

2. Method according to claim 1, characterized in that it further comprises filtering each sample during said decanting operation.

3. Method according to claim 1, characterized in that said relative movement is produced by displacement of said containers (R1).

4. Method according to any one of claims 1 to 3, characterized in that each sample is filtered after renewing of a filtering element before decanting.

5. Apparatus for the dosage of liquid samples comprising a plurality of pairs of a first (R1) and a second (R2) containers, the first containers (R1) each being adapted to contain a sample to be metered plus a quantity in excess of the volume to be obtained, the second containers (R2) being adapted to receive the metered quantities of sample, the apparatus further comprising a decanting station (C) of successive samples from their first container (R1) into their second container (R2) and transport means (1) to successively bring each pair of first and second containers (R1, R2) into the decanting station (C), said apparatus being characterized in that said decanting station (C) comprises :
   - means (R1; 17; 43) for pumping sample to carry out the decanting comprising a piston (17) cooperating with each of said first containers (R1), each realized as a cylinder receiving said piston (17), and drive means (43) to induce a relative axial movement between said piston (17) and each of said first containers (R1) during the decanting,
   - a pouring assembly (24 to 36) adapted to communicate with the second containers (R2), and
   - discharge means (38) adapted to be positioned between the pouring assembly (24 to 36) and each second container (R2) during a predetermined period of time at the beginning of the decanting and to be withdrawn during the remainder of the decanting, said predetermined period of time corresponding at most to the decanting of the excess of the sample.

6. Apparatus according to claim 5, characterized in that said piston (17) is fixedly mounted in said decanting station (C) and in that said drive means (43) comprise a vertically movable push piece (46, 47) able to engage said first container (R1) over said piston (17) by pushing against the bottom of said first container, then to cause the piston (17) to penetrate in said first container (R1) a predetermined distance, disengaging means (12 to 15) being provided for disengaging the first container (R1) from the piston (17) after completion of the decanting.

7. Apparatus according to claim 6, characterized in that the disengaging means comprise a guide plate (13) movable along vertical guides (12) provided in said decanting station (C), said plate having an opening (20) for the passage of the piston (17), said opening being bordered by a shoulder (20c) against which the upper edge of the first container (R1) comes to abut during said relative movement of the piston (17) and the first container (R1), and in that said disengaging means comprise springs (15) associated with said guides (12) and acting on said plate against upward movement thereof.

8. Apparatus according to any one of claims 5 to 7, characterized in said piston (17) comprises a central passage (18) through which each sample is driven out of the first container (R1) during decanting.

9. Apparatus according to any one of claims 5 to 8, characterized in that filtering means (37) are provided in said pouring assembly (24 to 36) for filtering the sample driven out of said first container (R1) during decanting.

10. Apparatus according to claim 9, characterized in that said pouring assembly comprises a first, funnel-shaped piece (34) below which are successively brought said second containers (R2), and a second piece (30) movably mounted in relation to the first piece and fitting in a fluidtight manner in the inlet of the first piece with an interposed filter element (37), said second piece (30) communicating with said container receiving said piston to deliver the liquid being decanted into said funnel-shaped first piece (34).

11. Apparatus according to claim 10, characterized in that said filter elements (37) form part of a band of filter paper brought step-by-step into said pouring assembly (24 to 36) to renew the filter paper after each decanting operation.

12. Apparatus according to any one of claims 5 to 11, characterized in that said pouring means comprise a mobile unit (40) with an internal duct (41) which communicates with an evacuation means (9) and in that said unit is slidably mounted in said decanting station (C) so that the mouth of said duct (41) may be placed under said pouring assembly (24 to 36) while said excess quantity of the sample is driven out of said first container (R1).

**Patentansprüche**

1. Verfahren zum Dosieren flüssiger Proben, bestehend aus dem Bereitstellen von Proben in mehreren ersten Behälter (R1), deren Volumen von der Menge der zu erhaltenden Probe vermehrt um eine überschüssige Menge der Probe gebildet ist und dem aufeinanderfolgenden Umfüllen des Inhaltes jedes ersten Behälters (R1) zunächst zu einem Ablauf (9, 41, 31) höchstens bis zum Betrage der überschüssigen Menge, dann zu einem zweiten Behälter (R2) bis zum Betrage der Menge der zu erhaltenden flüssigen Probe, wobei das Verfahren dadurch gekennzeichnet ist, daß zum Entnehmen der flüssigen Probe aus jedem ersten Behälter (R1) dieses als Zylinder, der einen Kolben (17) aufnimmt, ausgebildet ist und daß eine Relativbewegung zwischen dem Behälter (R1) und dem Kolben (17) ausgelöst wird, um zunächst das Spülen der Abflußleitung, durch welche die Flüssigkeit während des Umfüllens strömt, und dann das Dosieren durch Bestimmen der Dauer der Relativbewegung auszuführen.

2. Verfahren zum Dosieren nach Anspruch 1, dadurch gekennzeichnet, daß es weiters aus dem Filtrieren jeder Probe während des Umfüllvorganges besteht.

3. Verfahren zum Dosieren nach Anspruch 1, dadurch gekennzeichnet, daß es aus dem Auslösen der Relativbewegung durch Bewegen der Behälter (R1) besteht.

4. Verfahren zum Dosieren nach einem der Ansprüche 1 bis 3, dadurch gekennzeichnet, daß es aus dem Filtrieren jeder Probe nach dem Erneuern eines Filterelementes vor dem Umfüllvorgang besteht.

5. Vorrichtung zum Dosieren von flüssigen Proben mit mehreren Paaren gebildet aus einem ersten (R1) und einem zweiten Behälter (R2), wobei die ersten Behälter (R1) dazu bestimmt sind, jeweils eine zu dosierende Probe vermehrt um eine überschüssige Menge bezüglich des zu erzielenden Volumens aufzunehmen, wobei die zweiten Behälter (R2) dazu bestimmt sind, die dosierten Volumina der Probe aufzunehmen, wobei die Vorrichtung weiters eine Stelle zum Umfüllen (C) von aufeinanderfolgenden Proben aus ihrem ersten Behälter (R1) in ihren zweiten Behälter (R2) und Transportmittel (1) zum aufeinanderfolgenden Zuführen jedes Paares aus ersten und zweiten Behältern (R1, R2) in die Umfüllstelle (C) umfaßt, wobei die Vorrichtung dadurch gekennzeichnet ist, daß die Umfüllstelle (C) umfaßt:

- Vorrichtungen (R1; 17; 43) zum Pumpen von Flüssigkeit, um das Umfüllen auszuführen, umfassend einen Kolben (17), der mit jedem der ersten Behälter (R1) zusammenwirkt, die jeder als Zylinder ausgebildet sind, der den Kolben (17) aufnimmt, und Antriebsmittel (43), um eine axiale Relativbewegung zwischen dem Kolben (17) und jedem der ersten Behälter (R1) während des Umfüllens auszulösen,
- eine Füllanordnung (24 bis 36), die dazu bestimmt ist, mit den zweiten Behältern (R2) zu kommunizieren und
- Entleereinrichtungen (38), die dazu bestimmt sind, während einer vorbestimmten Zeitspanne, die am Beginn des Umfüllens liegt, zwischen einer Füllanordnung (24 bis 36) und jedem zweiten Behälter (R2) angeordnet und während des Restes der Dauer des Umfüllens zurückbewegt zu werden, wobei die vorbestimmte Zeitspanne höchstens dem Umfüllen der überschüssigen Probenmenge entspricht.

6. Vorrichtung nach Anspruch 5, dadurch gekennzeichnet, daß der Kolben (17) in der Umfüllstelle (C) ortsfest montiert ist und daß die Antriebsmittel (43) ein Schuborgan (46, 47) umfassen, das zu einer vertikalen Bewegung angeregt werden kann und das in der Lage ist, am Behälter (R1) über den Kolben (17) durch Schub gegen den Boden des Behälters anzugreifen, dann den Kolben (17) über eine vorgegebene Strecke in den Behälter (R1) eindringen läßt, wobei Rückstelleinrichtungen (12 bis 15) vorgesehen sind, um den Behälter (R1) nach Beendigung des Umfüllens vom Kolben (17) zu befreien.

7. Vorrichtung nach Anspruch 6, dadurch gekennzeichnet, daß die Rückstelleinrichtungen eine Führungsplatte (13) umfassen, die entlang vertikaler Führungen (12), die in der Umfüllstelle (C) vorgesehen sind, verschiebbar ist, wobei die Platte eine Öffnung (20) für den Durchtritt des Kolbens (17) aufweist, wobei diese Öffnung von einer Schulter (20c) begrenzt ist, gegen die der obere Rand des Behälters (R1) während der Relativbewegung zwischen dem Kolben (17) und dem Behälter (R1) in Anlage kommt, und daß die Rückstellvorrichtung Federn (15) aufweist, die den Führungen (12) zugeordnet sind und auf die Platte gegen eine aufsteigende Bewegung derselben einwirken.

8. Vorrichtung nach einem der Ansprüche 5 bis 7, dadurch gekennzeichnet, daß der Kolben (17) einen mittigen Kanal (18) aufweist, durch den die Flüssigkeit während des Umfüllens aus dem ersten Behälter (R1) entnommen wird.

9. Vorrichtung nach einem der Ansprüche 5 bis 8, dadurch gekennzeichnet, daß die Filtervorrichtung (37) in der Füllanordnung (24 bis 36) vorgesehen ist, um die aus dem ersten Behälter (R1) während des Umfüllens entnommene Flüssigkeit zu filtrieren.

10. Vorrichtung nach Anspruch 9, dadurch gekennzeichnet, daß die Füllvorrichtung einen ersten Teil (34) in Form eines Trichters, unter dem nacheinander die zweiten Behälter (R2) hinbewegt werden, und ein zweites Stück (30) aufweist, das gegenüber dem ersten Stück beweglich montiert ist und sich dicht in den Eingang des ersten Stückes unter Zwischenfügen eines Filterelementes (37) ausrichtet, wobei das zweite Stück (30) mit dem ersten Behälter, der den Kolben aufnimmt, verbunden wird, um die Flüssigkeit während des Umfüllens in das erste Stück (34) in Form des Trichters zu leiten.

11. Vorrichtung nach Anspruch 10, dadurch gekennzeichnet, daß die Filterelemente (37) Teile eines Papierfilterstreifens bilden, welcher der Füllanordnung (24 bis 36) schrittweise zugeführt wird, um das Papierfilter nach jedem Umfüllvorgang einer Probe zu erneuern.

12. Vorrichtung nach einem der Ansprüche 5 bis 11, dadurch gekennzeichnet, dass die Entleereinrichtungen einen beweglichen Block (40) aufweisen, der durch einen Kanal (41) durchbrochen ist, der mit einer Ableitung (9) in Verbindung steht, und dass der Block in der Umfüllstelle (C) verschiebbar montiert ist, damit die Oeffnung des Kanals (41) unter der Füllanordnung (24 bis 36) angeordnet werden kann, während überschüssige Probenflüssigkeit aus dem Behälter (R1) enfernt wird.

Fig.1

**Fig.2**

Fig. 6

Fig. 7

Fig. 3

Fig. 5

Fig. 4

Fig.8

Fig.9

Fig.10

EP 0 273 297 B1

EP 0 273 297 B1

R1                                    R2                    a)

                    64

R1

47

46                                    R2                    b)

                              22

R1

17

47

46                                    R2                    c)

R1                                    R2                    d)

Fig. 11

18

Fig. 11e

Fig. 11f

19